Europäisches Patentamt

European Patent Office

Office européen des brevets

(11) Veröffentlichungsnummer: **0 268 847**
B1

(12)

# EUROPÄISCHE PATENTSCHRIFT

(45) Veröffentlichungstag der Patentschrift:
24.10.90

(51) Int. Cl.⁵: **A47J 31/02, B65D 81/34**

(21) Anmeldenummer: 87115666.7

(22) Anmeldetag: 26.10.87

(54) Filter, insbesondere Kaffeefilter, sowie Verfahren zur Herstellung desselben.

(30) Priorität: 14.11.86 DE 3638990

(43) Veröffentlichungstag der Anmeldung:
01.06.88 Patentblatt 88/22

(45) Bekanntmachung des Hinweises auf die Patenterteilung:
24.10.90 Patentblatt 90/43

(84) Benannte Vertragsstaaten:
AT BE CH DE ES FR GB IT LI LU NL SE

(56) Entgegenhaltungen:
CH-A- 204 666
DE-A- 1 947 146
DE-B- 2 131 124
DE-C- 609 794
FR-A- 1 534 274
FR-A- 2 128 945
GB-A- 2 091 541

(73) Patentinhaber: Jacobs Suchard GmbH,
Langemarckstrasse 8-20, D-2800 Bremen 1(DE)

(72) Erfinder: Hampel, Hans-Joachim, Falkensteiner
Strasse 1, D-6236 Eschborn 2(DE)
Erfinder: Wittekind, Jürgen, Cranachstrasse 20,
D-6000 Frankfurt/Main 70(DE)

(74) Vertreter: Bolte, Erich, Dipl.-Ing. et al, c/o Meissner,
Bolte & Partner Patentanwälte Hollerallee 73,
D-2800 Bremen 1(DE)

## Beschreibung

Die Erfindung betrifft einen Filter, insbesondere Kaffeefilter, zum Aufsetzen auf den Rand einer Tasse oder dergleichen Zubereitungs-Gefäß gemäß Oberbegriff des Anspruchs 1 sowie und ein Verfahren zum Herstellen eines derartigen Filters.

Ein derartiger Filter ist durch die FR-A 534 274 bekannt.

Es ist bekannt, Tee, aber auch gemahlenen Kaffee in Aufgußbeutel zu füllen, wobei die Füllmenge für eine oder mehrere Tassen bestimmt ist. Kaffee-Aufgußbeutel ergeben beim Aufbrühen jedoch entweder ein unbefriedigendes Getränk infolge zu geringen Extraktgehalts, oder die Beutel müssen in der Tasse ausreichend lange intensiv bewegt werden, um den erforderlichen Extraktgehalt zu erreichen. Ferner nimmt der gemahlene Kaffee eine beträchtliche Wassermenge auf, so daß die Tasse nach dem Herausnehmen des Beutels nicht mehr voll ist.

Ausgehend von diesem Stand der Technik liegt der vorliegenden Erfindung die Aufgabe zugrunde, ein Mittel zur tassengerechten Zubereitung von Kaffee zur Verfügung zu stellen, mit dem beim Aufbrühen ohne weiteres der erforderliche Extraktgehalt erreicht wird und das einfach in der Herstellung sowie Handhabung ist. Es ist ferner Aufgabe der Erfindung, ein Verfahren zur Herstellung eines solchen Filters zu schaffen.

Diese Aufgabe wird in überraschend einfacher Weise durch die kennzeichnenden Merkmale der Ansprüche 1 bzw. 10 gelöst, wobei die Ansprüche 2 bis 9 und 11 bis 14 vorteilhafte Details der erfindungsgemäßen Konstruktion bzw. des erfindungsgemäßen Verfahrens betreffen.

Die Bedeutung der Erfindung liegt also in der Bereitstellung eines Tassenfilters sowie der Herstellung desselben mit einfachsten Mitteln. Dabei zeichnet sich das erfindungsgemäß ausgebildete Tassenfilter durch höchste Funktionsfähigkeit und Handhabungsfreundlichkeit aus.

Der Filterbeutel erstreckt sich erfindungsgemäß bis in die Ecken des Dreieckrahmens hinein, d.h. füllt den freien Querschnitt des Dreieckrahmens vollständig aus, wodurch sichergestellt ist, daß beim Aufgießen mit heißem Wasser dieses nicht am Filterbeutel vorbei in die Tasse gelangt. Herstellungstechnisch läßt sich dies durch Verwendung des im Anspruch 11 beschriebenen Zuschnitts sehr einfach erreichen, wobei dieser dadurch gekennzeichnet ist, daß sich der Filterpapierzuschnitt über die gesamte Länge des zugeordneten Kartonzuschnitts erstreckt. Demnach ist der Filterpapierzuschnitt am oberen Rand des aus einem Kartonzuschnitt gebildeten Dreieckrahmens über die volle Ursprungslänge des Kartonzuschnitts verbunden.

Demnach ist die Ausbildung des Tassenfilters nach den Ansprüchen 2 ff. sowohl herstellungs- als auch handhabungstechnisch besonders vorteilhaft. Die Handhabungsfreundlichkeit ergibt sich u.a. auch durch die Maßnahmen nach Anspruch 2, wonach der zu einem Dreieck auffaltbare Papp- bzw. Kartonrahmen an wenigstens einer Seite nach innen gefaltet ist unter Ausbildung einer M-Falte.

Dadurch ist es möglich, daß das Filter flach zusammengefaltet werden kann, wodurch ein minimaler Transport- und Stauraum benötigt wird. Andererseits erlaubt diese Faltung eine Anpassung des Filters an unterschiedliche Randdurchmesser von Tassen oder dgl. Gefäßen bei hoher Standfestigkeit. Durch die M-Faltung ist nämlich gewährleistet, daß der Filterrahmen nicht ohne weiteres seitlich über den Tassenrand abrutschen kann. Die Standfestigkeit kann zusätzlich erhöht werden durch die Maßnahmen nach Anspruch 9, wonach der Filterrahmen an seinem der Tasse oder dgl. zugeordneten Stützrand Aussparungen zur Aufnahme des Tassen- oder dergleichen-Randes aufweist.

Vorzugsweise ist der Filterbeutel herstellerseitig allseitig geschlossen unter Einschluß einer vorgegebenen Menge Kaffee oder dgl., wobei die Öffnung des Filterbeutels vor seinem Gebrauch längs des oberen Begrenzungsrandes desselben erfolgt. Nach Anspruch 7 ist der Filterbeutel durch einen Klebstreifen oder eine am Rahmenelement angeschlossene Lasche verschließbar.

Bei Einschluß einer vorgegebenen Kaffeemenge ist das erfindungsgemäße Tassenfilter flach zusammengefaltet in einer äußeren beutelartigen Umhüllung luft- und aroma dicht eingeschlossen, vorzugsweise vakuumverpackt.

Der Zuschnitt zur Herstellung eines Filters mit Papp- bzw. Kartonrahmen ist denkbar einfach. Er ist als Rechteckzuschnitt aus Karton oder dgl. ausgebildet, längs dessen einen Längsrandes ein vorzugsweise etwa deckungsgleicher Zuschnitt Filterpapier befestigt, insbesondere angesiegelt oder auch angenäht, ist. Wichtig ist, daß der Filterpapierzuschnitt die gleiche Länge wie der Kartonzuschnitt aufweist. Die Breite des Filterpapierzuschnitts kann auch geringer sein als die Breite des Kartonzuschnitts.

Unter Verwendung eines solchen doppellagigen Zuschnitts ist die Herstellung des erfindungsgemäß ausgebildeten Filters denkbar einfach. Dementsprechend eignet sich das erfindungsgemäße Tassenfilter zur fabrikmäßigen Herstellung als Massenprodukt. Hinsichtlich der einzelnen Verfahrensschritte wird auf Anspruch 10 verwiesen, wobei vorteilhafte Verfahrensdetails in den Ansprüchen 11 ff. beschrieben sind.

Nachstehend wird ein Ausführungsbeispiel eines erfindungsgemäß ausgebildeten Tassenfilters sowie dessen Herstellung anhand der beigefügten Zeichnung näher erläutert. Es zeigen:

Fig. 1 bis 6 eine schematische Darstellung der einzelnen Verfahrensschritte zur Herstellung eines erfindungsgemäß ausgebildeten Tassenfilters;

Fig. 7a, 7b das erfindungsgemäß hergestellte bzw. ausgebildete Tassenfilter in Draufsicht, und zwar teilweise (Fig. 7a) sowie ganz (Fig. 7b) aufgefaltet; und

Fig. 8 das Tassenfilter gemäß den Fig. 7a, 7b, aufgesetzt auf eine Tasse, in perspektivischer Ansicht.

Zur Herstellung eines Tassenfilters der noch näher zu beschreibenden Art werden zwei im wesentlichen gleich große, nämlich gleich breite Bahnen aus Filterpapier 20 und Karton 21 aufeinandergefördert unter Ausbildung einer doppellagigen Materialbahn 28. Fortlaufend wird an einem Längsrand eine durchgehende Siegelnaht 22 angebracht durch beispielsweise radförmige Siegelwerkzeuge 23. Dementsprechend müssen sowohl das Filterpapier als auch der Karton aus siegelbarem Werkstoff oder mit einem siegelbaren Material oberflächenbeschichtet sein.

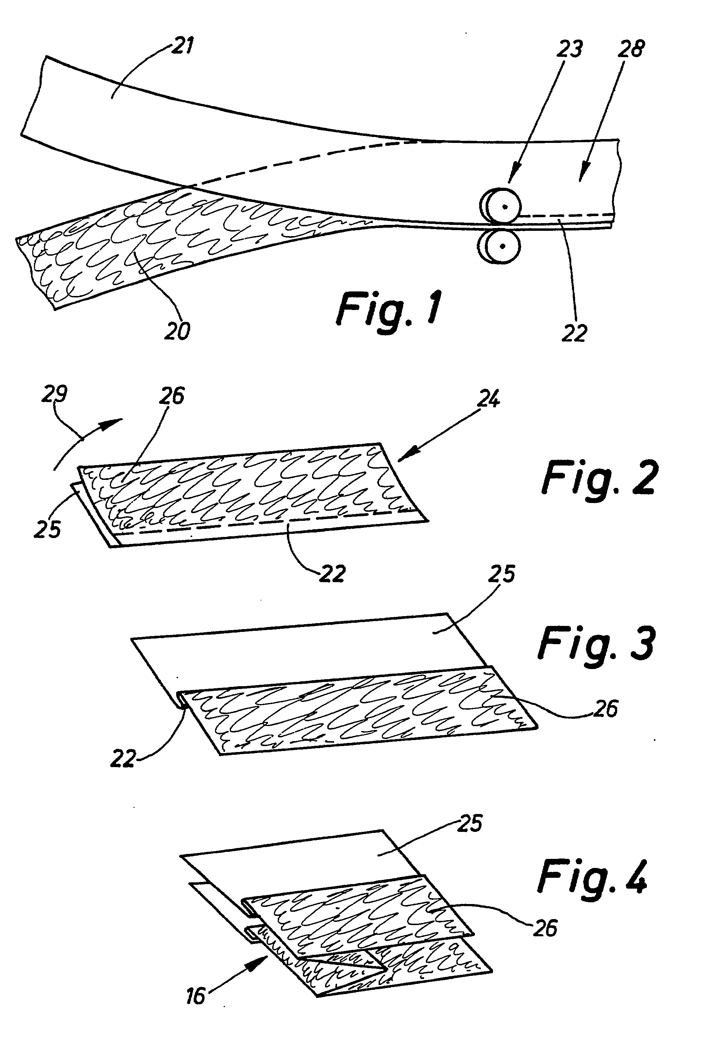

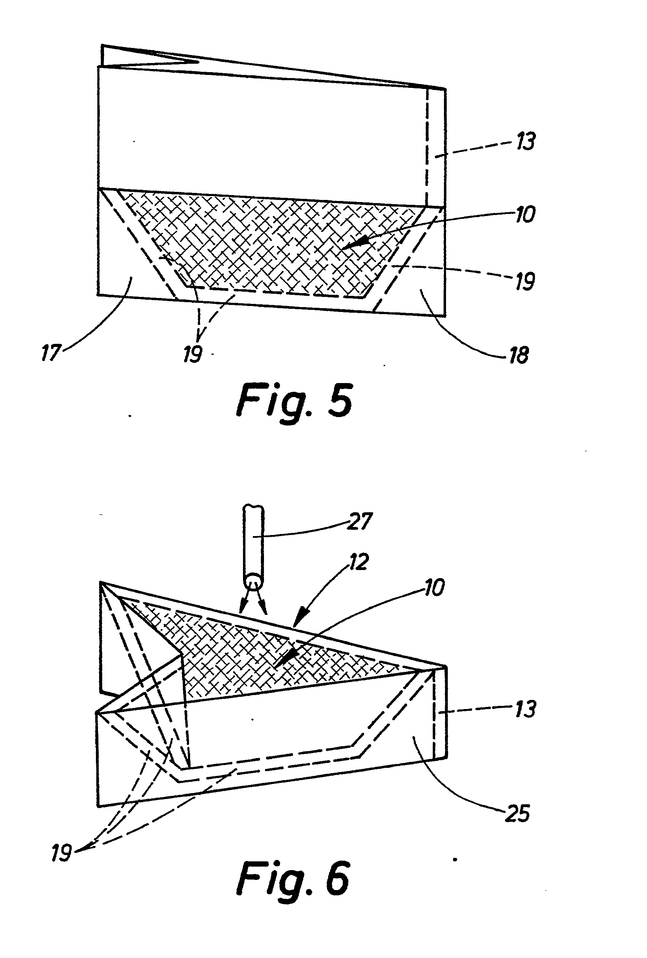

Sodann wird das fortlaufende, doppelbahnige bzw. doppellagige Gebilde 28 in Zuschnitte 24 entsprechend Fig. 2 aufgeteilt, die der erforderlichen Länge für ein Tassenfilter entsprechen. Die beiden Lagen jedes Zuschnitts werden nunmehr auseinandergefaltet (Pfeil 29 in Fig. 2), so daß ein Kartonzuschnitt 25 und ein Filterpapierzuschnitt 26 nebeneinander liegen, jedoch über die Siegelnaht 22 nach wie vor miteinander verbunden bleiben (Fig. 3). In dieser Stellung werden die beiden Zuschnitte zunächst mittig gefaltet und dann wird durch ein fortlaufendes Faltwerkzeug, insbesondere ein nicht dargestelltes Faltschwert, eine M-Falte 16 entsprechend Fig. 4 ausgebildet. Sodann erfolgt eine Siegelung an den freien, in Fig. 4 rechten Stirnrändern des Kartonzuschnitts 25 und Ausbildung einer entsprechenden Randsiegelnaht 13 (Fig. 5). Anschließend, jedoch vorzugsweise gleichzeitig wird der von dem Kartonzuschnitt 25 abstehende Filterpapierzuschnitt 24, der ebenfalls an einer Seite durch die erwähnte M-Falte 16 gekennzeichnet ist, mit einer V-, vorzugsweise trapezförmigen, Siegelnaht 19 versehen unter Ausbildung eines Filterbeutels 10. Die seitlich bzw. an den Ecken überstehenden dreieckförmigen Filterpapier-Zwickel 17 und 18 (Fig. 5) werden abgetrennt bzw. abgeschnitten. Damit erhält der Filterbeutel eine insgesamt trapezförmige Gestalt.

Anschließend wird der Filterbeutel 10 zwischen die Wandungen des Kartonzuschnitts 25 gebracht. Zu diesem Zweck wird in Fig. 5 von unten, in Fig. 6 von oben her über eine Blasdüse 27 Druckluft auf den Filterbeutel 10 gerichtet, so daß diese nach innen zwischen die Wandungen des Kartonzuschnitts 25 gelangt. Der Kartonzuschnitt 25 bildet in der beschriebenen Ausführungsform einen auffaltbaren Dreieckrahmen für den Filterbeutel, der längs des gesamten oberen Randes 12 mit dem Kartonzuschnitt verbunden, nämlich versiegelt ist.

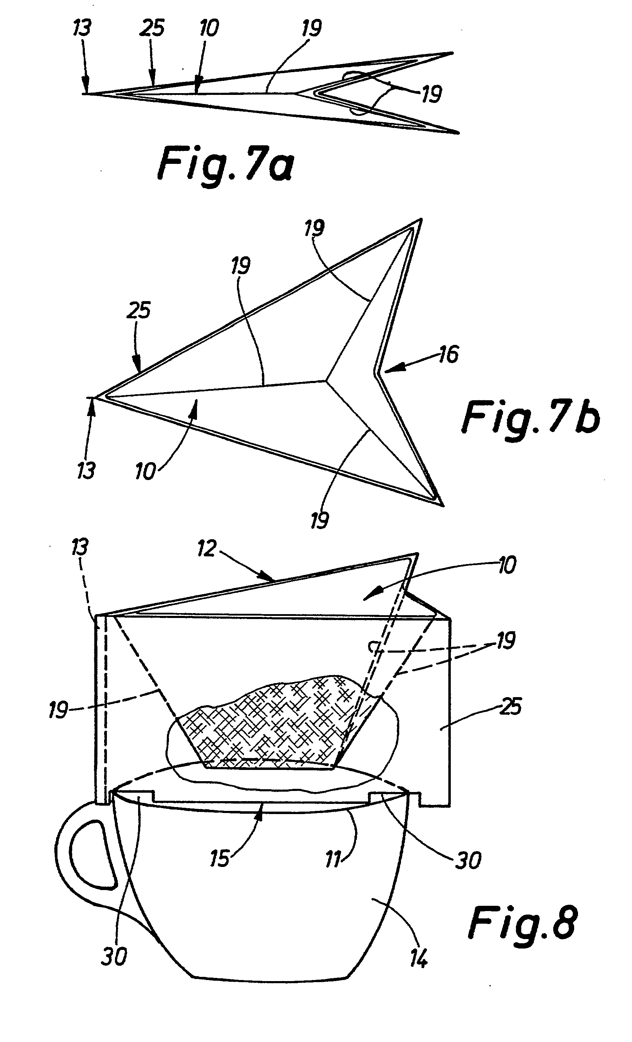

Durch die M-Faltung 16 ist das in der beschriebenen Weise hergestellte Tassenfilter flach zusammenfaltbar und unter Auffaltung an unterschiedliche Randdurchmesser von Kaffee- oder dergleichen-Tassen anpaßbar, derart, daß es nach dem Aufsetzen auf den Tassenrand von diesem nicht ohne weiteres abrutscht, d.h. auf dem Tassenrand sicher steht. In Fig. 8 ist das erfindungsgemäß ausgebildete Tassenfilter auf den Rand 11 einer Tasse 14 aufgesetzt.

Zur erleichterten Auffaltung des beschriebenen Tassenfilters ist die Siegelnaht 19 in Fig. 5 im Bereich der M-Falte 16 jeweils so ausgebildet, daß sie nur zwischen zwei unmittelbar aufeinanderliegenden Zuschnitteilen vorliegt. Es wird diesbezüglich auf die Fig. 7a bis 8 verwiesen.

Vorzugsweise ist der Filterbeutel 10 herstellerseitig mit einer vorgegebenen Menge Kaffee gefüllt. Nach der Füllung wird das Tassenfilter flach zusammengefaltet, längs des oberen Randes 12 verschlossen, z.B. mittels eines Klebstreifens oder einer Schließlasche, und anschließend in einer äußeren Umhüllung luft- und aromadicht untergebracht, vorzugsweise vakuumverpackt. Beim Gebrauch wird diese äußere Umhüllung aufgerissen und entfernt, der vorerwähnte Klebstreifen abgezogen, das Tassenfilter aufgefaltet und auf eine Tasse bzw. auf den Tassenrand 11 einer Tasse 14 aufgesetzt. Anschließend kann mit heißem Wasser die tassengerechte Menge Kaffee aufgebrüht werden.

Um die Standsicherheit des beschriebenen Tassenfilters bzw. des zu einem Dreieck auffaltbaren Kartonzuschnitts 25 auf dem Tassenrand 11 einer Tasse 14 zu erhöhen, kann der aus dem Zuschnitt 25 hergestellte Kartonrahmen an seinem der Tasse 14 zugeordneten Stützrand 15 Aussparungen 30 zur Aufnahme des Tassenrandes 11 aufweisen (siehe Fig. 8).

Diese Ausnehmungen werden vor der Herstellung der Einzelzuschnitte 24 an der Materialbahn 20 aus Karton fortlaufend hergestellt durch entsprechend zugeordnete Rollen- bzw. Walzen-Stanzwerkzeuge. Die Ausnehmungen werden in Fig. 1 an dem der Siegelnaht 22 gegenüberliegenden Längsrand der Materialbahn 20 aus Karton ausgebildet, und zwar bei fortlaufendem Transport derselben.

**Patentansprüche**

1. Filter, insbesondere Kaffeefilter, mit einem auf den Rand (11) einer Tasse oder dergleichen Zubereitungs-Gefäß aufsetzbaren Halterahmen und einem innerhalb desselben befestigten Filterbeutel (10) aus Filtermaterial, insbesondere Filterpapier, daß wobei der Filterbeutel (10) längs des gesamten inneren Umfangsrandes des Halterahmens an diesem befestigt ist, so daß der gesamte freie Querschnitt des Halterahmens durch den Filterbeutel (10) ausgefüllt ist, dadurch gekennzeichnet, daß der Halterahmen im Grundriß dreieckförmig ist, und daß der den Filterbeutel (10) haltende prismatische Halterahmen durch einen zu einem Dreieck auffaltbaren rechteckförmigen Papp- oder Kartonzuschnitt (25) gebildet ist.

2. Filter nach Anspruch 1, dadurch gekennzeichnet, daß der zu einem Dreieck auffaltbare Kartonzuschnitt (25) an wenigstens einer Seite nach innen gefaltet ist unter Ausbildung einer M-Falte (16) mit den jeweils anschließenden Seitenwandungen des den Dreieckrahmen bildenden Kartonzuschnitts (25).

3. Filter nach einem der Ansprüche 1 bis 2, dadurch gekennzeichnet, daß der Öffnungsrand des Filterbeutels (10) am oberen Rand (12) des auf eine Tasse (14) aufsetzbaren Dreieckrahmens über die volle Umfangslänge desselben mit diesem verbunden, insbesondere versiegelt oder vernäht, ist.

4. Filter nach einem oder mehreren der vorangehenden Ansprüche, dadurch gekennzeichnet, daß der Filterbeutel (10) durch eine etwa trapezförmige Seiten- und Bodensiegelnaht (19) begrenzt ist, derart, daß der Filterbeutel (10) innerhalb des Halterahmens, insbesondere innerhalb der Wandungen eines aus einem Kartonzuschnitt (25) gebildeten Halterahmens, liegt.

5. Filter nach einem oder mehreren der Ansprüche 1 bis 4 dadurch gekennzeichnet, daß der Halterahmen aus einem rechteckförmigen Karton- oder Pappzuschnitt (25) gefaltet ist, wobei die beiden stirnseitigen Ränder desselben miteinander verbunden, insbesondere mit einer Randsiegelnaht (13), versiegelt sind.

6. Filter nach einem oder mehreren der Ansprüche 1 bis 5, dadurch gekennzeichnet, daß der Filterbeutel (10) allseitig verschlossen ist unter Einschluß einer vor gegebenen Menge Kaffee oder dgl.

7. Filter nach Anspruch 6, dadurch gekennzeichnet, daß der Filterbeutel (10) durch einen Klebstreifen oder eine am Dreieckrahmen, insbesondere bei Ausbildung desselben aus einem Kartonzuschnitt (25), angeschlossene Lasche verschließbar ist.

8. Filter nach einem oder mehreren der Ansprüche 1 bis 7, dadurch gekennzeichnet, daß es unter flacher Zusammenfaltung des Halterahmens samt mit Kaffee gefülltem Filterbeutel (10) in einer äußeren beutelartigen Umhüllung luft- und aromadicht eingeschlossen, vorzugsweise in dieser vakuumverpackt, ist.

9. Filter nach einem oder mehreren der Ansprüche 1 bis 8, dadurch gekennzeichnet, daß der Halterahmen zur Erhöhung der Standfestigkeit an seinem der Tasse (14) oder dergleichen Gefäß zugeordneten Stützrand (15) Aussparungen (30) zur Aufnahme des Tassen- oder dergleichen-Randes (11) aufweist.

10. Verfahren zur Herstellung eines Filters, nach einem der Ansprüche 1 bis 10,
**dadurch gekennzeichnet, daß**

a) zwei gleich lange und vorzugsweise etwa gleich breite Bahnen aus Filterpapier (20) und Karton (21) unter Ausbildung ei ner doppellagigen Materialbahn (28) aufeinandergefördert und längs des einen Längs- bzw. Seitenrandes miteinander verbunden, insbesondere versiegelt (Siegelnaht 22) werden;

b) sodann die doppellagige Materialbahn (28) in rechteckförmige Zuschnitte (24) aufgeteilt werden, die jeweils die erforderliche Länge für einen Filteraufsatz aufweisen;

c) anschließend die Zuschnitte (24) jeweils zunächst mittig und dann zu beiden Seiten im Abstand von dieser Mittenfaltung entgegengesetzt gefaltet werden, derart, daß unter Ausbildung einer M-Faltung (16) die stirnseitigen Ränder übereinanderliegen;

d) die übereinanderliegenden Stirnränder der Zuschnitte (24) jeweils miteinander verbunden, insbesondere mit einer Randsiegelnaht (13) versiegelt werden unter Ausbildung eines auffaltbaren den Halterahmen darstellenden Dreieckrahmens; und daß

e) das Filterpapier (24) innerhalb des Dreieckrahmens zu einem tütenartigen Beutel (10) geformt wird.

11. Verfahren nach Anspruch 10, dadurch gekennzeichnet, daß vor der Faltung des Zuschnitts (24) die beiden Materiallagen desselben auseinandergefaltet werden, so daß ein Kartonzuschnitt (25) und ein Filterpapierzuschnitt (26) nebeneinanderliegen.

12. Verfahren nach Anspruch 11, dadurch gekennzeichnet, daß zur Ausbildung eines tütenartigen Filterbeutels (10) nach Faltung des Zuschnitts (24), vorzugsweise gleichzeitig mit der Siegelung der übereinanderliegenden Stirnränder des Kartonzuschnitts (25), der von diesem abstehende Filterpapierzuschnitt (26) mit einer etwa V- oder trapezförmigen Siegelnaht (19) versehen wird und daß anschließend der Kartonzuschnitt (25) aufgefaltet und der Filterbeutel in diesen hineingefaltet, vorzugsweise geblasen wird, um dann den Kartonzuschnitt (25) samt Filterbeutel (10) wieder flach zusammenzufal ten, ggf. nach vorheriger Befüllung des Filterbeutels mit einer vorgegebenen Menge Kaffee oder dgl.

13. Verfahren nach Anspruch 12, dadurch gekennzeichnet, daß der mit Kaffee oder dgl. befüllte Tassenfilter in eine luft- und aromadichte Umhüllung (Beutel) eingeschlossen wird, vorzugsweise in dieser vakuumverpackt wird.

14. Verfahren nach Anspruch 12 oder 13, dadurch gekennzeichnet, daß die bei der Ausbildung des Filterbeutels (10) seitlich bzw. an den Ecken überstehenden dreieckförmigen Zwickel (17, 18) vor Einfaltung in den zu einem Dreieckrahmen auffaltbaren Kartonzuschnitt (25) abgetrennt werden.

**Revendications**

1. Filtre, en particulier filtre à café, comprenant un cadre de support pouvant être posé sur le bord (11) d'une tasse ou d'un récipient de préparation analogue et un sachet filtrant (10) en matière de filtrage, en particulier en papier filtre, qui est fixé à l'intérieur de ce cadre, le sachet filtrant (10) étant fixé sur ce cadre de support le long de la totalité de son bord, périphérique internel de façon que toute la section transversale libre du cadre de support soit remplie par le sachet filtrant (10), caractérisé en ce que le cadre de support est de forme triangulaire dans une vue en plan et en ce que le cadre de support prismatique qui maintient le sachet filtrant (10) est formé par un flan en carton-pâte ou en carton de forme rectangulaire qui peut être déployé en un triangle.

2. Filtre suivant la revendication 1, caractérisé en ce que le flan en carton (25) déployable en un triangle est plié vers l'intérieur au moins d'un côté, avec formation d'un pli en M (16), avec les parois latérales respectivement rattachées du flan en carton (25) formant le cadre triangulaire.

3. Filtre suivant l'une des revendications 1 et 2, caractérisé en ce que, sur le bord supérieur (12) du cadre triangulaire qui peut être posé sur une tasse (14), le bord d'ouverture du sachet filtrant (10), est relié, en particulier scellé ou cousu, à ce cadre triangulaire sur la totalité de sa longueur périphérique.

4. Filtre suivant une ou plusieurs des revendications précédentes, caractérisé en ce que le sachet filtrant (10) est limité par un joint de scellement latéral et de fond (19) approximativement trapézoïdal de telle façon que le sachet filtrant (10) soit à i'intérieur du cadre de support, en particulier à l'intérieur des parois d'un cadre de support formé à partir d'un flan en carton (25).

5. Filtre suivant une ou plusieurs des revendications 1 à 4, caractérisé en ce que le cadre de support à base d'un flan en carton ou en carton-pâte (25) de forme rectangulaire est plié, les deux bords frontaux de celui-ci étant reliés l'un à l'autre, en particulier scellé par un joint de scellement de bord (13).

6. Filtre suivant une ou plusieurs des revendications 1 à 5, caractérisé en ce que le sachet filtrant (10) est fermé de tous côtés, avec inclusion d'une quantité prédéterminée de café ou de matière analogue.

7. Filtre suivant la revendication 6, caractérisé en ce que le sachet filtrant (10) peut être fermé par un ruban adhésif ou une languette raccordée au cadre triangulaire, en particulier lors de la réalisation de ce dernier à partir d'un flan en carton (25).

8. Filtre suivant une ou plusieurs des revendications 1 à 7, caractérisé en ce que, en repliant à plat le cadre de support conjointement au sachet filtrant (10) rempli de café, il est enfermé de manière étanche à l'air et aux arômes dans une enveloppe extérieure en forme de sac, de préférence emballé sous vide dans celle-ci.

9. Filtre suivant une ou plusieurs revendications 1 à 8, caractérisé en ce que, pour augmenter la stabilité, le cadre de support présente sur son bord d'appui (15) adjacent à la tasse (14) ou au récipient analogue des évidements (30) destinés à recevoir le bord (11) de la tasse ou du récipient analogue.

10. Procédé de préparation d'un filtre suivant une des revendications 1 à 10, caractérisé en ce que

a) deux bandes, de même longueur et de préférence approximativement de même largeur, en papier filtre (20) et en carton (21) sont avancées l'une sur l'autre avec réalisation d'une bande de matière à double couche (28) et sont reliées l'une à l'autre, en particulier scellées (joint de scellement 22), le long d'un bord longitudinal ou latéral,

b) la bande de matière à double couche (28) est divisée en flans (24) rectangulaires qui présentent chacun la longueur requise pour une garniture filtrante,

c) ensuite les flans (24) sont tout d'abord pliés au centre et ensuite pliés de part et d'autre dans le sens opposé à distance de ce pli central de telle façon que les bords frontaux se superposent avec formation d'un pli en W (16),

d) les bords frontaux superposés des flans (24) sont mutuellement reliés, en particulier scellés par un joint de scellement de bord (13), avec réalisation d'un cadre triangulaire déployable, qui représente le cadre de support, et

e) le papier filtre (24) est façonné à l'intérieur du cadre triangulaire pour former un sachet (10) de type cornet.

11. Procédé suivant la revendication 10, caractérisé en ce que, avant le pliage du flan (24), les deux couches de matière de ce dernier sont écartées de façon qu'un flan en carton (25) et un flan en papier filtre (26) soient disposés l'un à côté de l'autre.

12. Procédé suivant la revendication 11, caractérisé en ce que, pour la réalisation d'un sachet filtrant en cornet (10), après pliage du flan (24), de préférence simultanément au scellage des bords frontaux superposés du flan en carton (25), le flan en papier filtre (26) faisant saillie par rapport à ce dernier est pourvu d'un joint de scellement (19) en V ou de forme trapézoïdale et en ce qu'ensuite le flan en carton (25) est déployé et le sachet filtrant est replié, de préférence soufflé, à l'intérieur de celui-ci, pour replier à nouveau ensuite à plat le flan en carton (25) conjointement au sachet filtrant (10), éventuellement après remplissage préalable du sachet filtrant par une quantité prédéterminée de café ou de matière analogue.

13. Procédé suivant la revendication 12, caractérisée en ce que le filtre pour tasse rempli de café ou d'une matière analogue est enfermé dans une enveloppe (sac) étanche à l'air et aux arômes, en étant de préférence emballé sous vide dans cette dernière.

14. Procédé suivant l'une des revendications 12 et 13, caractérisé en ce que les goussets triangulaires (17, 18) débordant latéralement ou respectivement aux coins lors de la formation du sachet filtrant (10) sont séparés avant le repliage à l'intérieur du flan en carton (25) qui peut être déployé pour former un cadre triangulaire.

## Claims

1. Filter, especially coffee filter, with a holding frame which can be attached to the edge (11) of a cup or suchlike preparation vessel, and with a filter bag (10) fastened inside the holding frame and made of filter material, especially filter paper, the filter bag (10) being fastened to the holding frame along the entire inner peripheral edge of the latter, so that the total free cross-section of the holding frame is filled by the filter bag (10) characterized in that the holding frame is of triangular contour, and in that the prismatic holding frame holding the filter bag (10) is formed by a rectangular paperboard or cardboard blank (25) which can be unfolded into a triangle.

2. Filter according to Claim 1, characterized in that the cardboard blank (25) which can be unfolded into a triangle is folded inwards on at least one side, to form an M-shaped fold (16) with the respective adjacent side walls of the cardboard blank (25) forming the triangular frame.

3. Filter according to one of Claims 1 to 2, characterized in that the opening edge of the filter bag (10) is joined, especially sealed or sewn, to the top edge (12) of the triangular frame attachable to a cup (14), over the entire peripheral length of this triangular frame.

4. Filter according to one or more of the preceding Claims, characterized in that the filter bag (10) is limited by an approximately trapezoidal side and bottom sealing seam (19), in such a way that the filter bag (10) lies within the holding frame, especially within the walls of a holding frame formed from a cardboard blank (25).

5. Filter according to one or more of Claims 1 to 4, characterized in that the holding frame is folded from a rectangular cardboard or paperboard blank (25), and the two end edges of the latter are joined, especially sealed to an edge sealing seam (13), to one another.

6. Filter according to one or more of Claims 1 to 5, characterized in that the filter bag (10) is closed on all sides, at the same time containing a predetermined quantity of coffee or the like.

7. Filter according to Claim 6, characterized in that the filter bag (10) can be closed by means of an adhesive strip or a tab connected to the triangular frame, especially if the latter is produced from a cardboard blank (25).

8. Filter according to one or more of Claims 1 to 7, characterized in that, with the holding frame, together with the coffee-filled filter bag (10), being folded together flat, it is enclosed in an outer pouchlike wrapping in an air-tight and aroma-tight manner, preferably vacuum-packaged in this.

9. Filter according to one or more of Claims 1 to 8, characterized in that, in order to increase stability, the holding frame, on its supporting edge (15) assigned to the cup (14) or suchlike vessel, has recesses (30) for receiving the edge (11) of the cup or the like.

10. Process for producing a filter according to one of Claims 1 to 9, characterized in that

a) two webs of filter paper (20) and cardboard (21), of the same length and preferably of approximately the same width, are conveyed onto one another, to form a double-ply web of material (28), and are joined, especially sealed (sealing seam 22), to one another along one longitudinal or side edge,

b) the double-ply web of material (28) is then divided into rectangular blanks (24) which each have the necessary length for a filter unit,

c) subsequently, the blanks (24) are each folded first centrally and then on both sides in opposite directions at the distance from this centre fold, in such a way that the end edges are located above one another, thereby forming an M-shaped fold (16),

d) the end edges of the blanks (24) located above one another are respectively joined, especially sealed to an edge sealing seam (13), to one another, to form an unfoldable triangular frame representing the holding frame, and

e) the filter paper (24) inside the triangular frame is shaped into a cone-like bag (10).

11. Process according to Claim 10, characterized in that, before the blank (24) is folded, the two plies of material of the latter are unfolded from one another, so that a cardboard blank (25) and a filter-paper blank (26) are next to one another.

12. Process according to Claim 11, characterized in that, in order to form a cone-like filter bag (10), after the blank (24) has been folded, preferably at the same time as the sealing of the end edges of the cardboard blank (25) which are located above one another, the filter-paper blank (26) projecting from this is provided with an approximately V-shaped or trapezoidal sealing seam (19), and in that the cardboard blank (25) is subsequently unfolded and the filter bag is folded, preferably blown, into this, the cardboard blank (25), together with the filter bag (10), then being folded together flat again, if appropriate after the filter bag has previously been filled with a predetermined quantity of coffee or the like.

13. Process according to Claim 12, characterized in that the cup filter, filled with coffee or the like, is enclosed in an air-tight and aroma-tight wrapping (pouch), preferably vacuum-packaged in this.

14. Process according to Claim 12 or 13, characterized in that the triangular gussets (17, 18) projecting laterally or at the corners when the filter bag (10) is formed are detached before the filter bag (10) is folded into the cardboard blank (25) which can be unfolded into a triangular frame.

EP 0 268 847 B1

*Fig. 1*

*Fig. 2*

*Fig. 3*

*Fig. 4*

**Fig. 5**

**Fig. 6**

**Fig.7a**

**Fig.7b**

**Fig.8**